# EUROPEAN PATENT APPLICATION

(11) **EP 1 295 966 A1**
(43) Date of publication of application: **26.03.2003**
(21) Application number: 00961246.6
(22) Date of filing: 15.09.2000
(51) Int. Cl.: C23D 17/00

(54) **VITREOUS OR PEWTER ENAMEL STRIPPER AND PRODUCTION AND UTILIZATION METHODS THEREOF**

(30) Priority: 04.10.1999 MX 9910269
(71) Applicant: Issa Shahin, Nizar Georges, Mexico, D.F. 06600 (MX)
(72) Inventor: ISSA SHAHIN, Nizar Georges, Mexico, D.F. 06600 (MX); HEMMER COLMENARES, Federico, Cuernavaca, Morelos (MX)
(74) Representative: Vercaemer, Laurence
(86) International application number: MX0000036
(87) International publication number: WO01025506

(57) **Abstract**

The procedure for the preparation of a substance to remove vitreous enamels or spelters is described. Said substance is a mixture of water which percentage in weight corresponds to a 68% to which the following are added: ammonium salts with a 96-97% concentration and which percentage in weight is of an 11%, glacial acetic acid with a 98-99% concentration and a percentage in weight that corresponds to a 14% and sulphuric acid with a 98% concentration and a percentage in weight of 7%, a mixture in which the remaining 68% corresponds to water. The procedure to remove vitreous enamels or spelter consists on dipping the enamelled pieces inside a container or pan at a higher temperature than the ambient temperature.

## Description

### Background of the invention

The vitreous enamels or speller application industry or those industries that require this kind of finish to manufacture products such as household appliances, face the problem that when enamelled pieces have some defect, the only effective and practical means to remove the enamel and enamel them again, consists of an attack through sandblasting which is very costly due to the equipment and the level of specialization that the operator requires as well as the critical granularity level of the sands. On the other hand, even though it is possible to chemically attack vitreous enamels through the application of hydrofluoric acid in high concentrations on the enamelled surface, its high reactivity makes this procedure impossible and impractical due to the fact that handling the mentioned acid is extremely dangerous, considering that its vapors are capable of destroying the respiratory tract of the operators in a short period of time.

The object of this invention is to provide a simple and safe method to remove these vitreous enamels or spotters.

### Description of the invention

The procedure for the preparation of a substance to remove vitreous enamels or spelters made by mixing water with ammonium salts with a 96-97% concentration and glacial acetic acid with a 98-99% concentration and sulphuric acid with a 98% concentration is described. Said substances arc added to the water in the following percentages in weight:

| | |
|---|---|
| ammonium salts (ammonium bifluorade) | 11% |
| glacial acetic acid | 14% |
| sulphuric acid | 7% |
| water | 68% |

Said proportions may vary depending on the characteristics of the enamel to be removed, such) as its thickness or the quality of its components and application.

### Best method to carry out the invention

The following description of the procedure is offered to further illustrate the novelty and usefulness of this invention thus not with the intention to wrongly limit same.

The 2 first chemical compounds, i.e, the ammonium salts or ammonium bifluorade and the glacial acetic acid are perfectly mixed with the water in the mentioned proportions with a mechanical stirring rod.

The procedure to remove the vitreous enamel or spelter applied on metallic surfaces consists on dipping the pieces inside a container or pan which walls are made of, or at least covered with a material resistant to the attack of the mentioned compounds.

Said dipping is carried out at a temperature within a range between 40 and 50 degrees (Celsius) with the purpose of increasing the speed of the process to remove the vitreous enamel or spelter and the necessary heat may be provided by electrical resistances installed in the external walls of the container or pan so that these can provide the necessary calorific energy through conduction.

Once the superficial particles of the vitreous enamel or spelter start to come off, approximately 2 hours after having been dipped in the substance, a 7% of sulphuric acid is added to same with the purpose of attacking the earthy minerals such as feldspars that come with particles of glass or silica in the formulations of vitreous enamels or spelters.

The remover liquid must be kept in movement in order to avoid that the removed enamel particles precipitate and concentrate at the bottom of the container or pan. reducing its reactivity and leaving the upper part of the container where other pieces have been dipped, free from the vitreous enamel or spelter before the lower part, for this, manual means can he used or a mixer activated electrically with blades resistant to the chemical compounds mentioned.

Optionally it is possible to make this remover substance circulate through a centrifugal pump and pipes resistant to the attack of the chemical compounds mentioned towards a precipitator and hack to the container or pan which can be drained periodically to remove the removed vitreous enamel or spelter particles.

## Claims

1. Substance to remove vitreous enamels or spellers and its preparation and application procedures which include a mixture of water which percentage in weight corresponds to a 68% to which the following are added; ammonium salts with a 96 - 97% concentration and a percentage in weight of 11%, glacial acetic acid with a 98 - 99% concentration and a percentage in weight that corresponds to a 14% sulphuric acid with a 98% concentration and a percentage of 7% in weight, a mixture in which the remaining 68% corresponds to the water.

2. Substance to remove vitreous enamels or spelters and its preparation and application procedures in accordance with clause I which procedure to remove the vitreous enamel or spelter applied on metallic surfaces consists on dipping the pieces inside of a container or pan with a temperature within a range between 40 and 50 degrees (Celsius) with the purpose of increasing the speed of the process to remove the vitreous enamel. When the superficial particles of the vitreous enamel or spelter start to come off, approximately 2 hours after having been dipped, 7% of sulphuric acid is added to the substance with the purpose of starting the attack of the earthy minerals such as feldspars that come with the glass or silica particles in the vitreous enamels or spelters' formulations, while the remover liquid is kept in movement either by manual means or with an electrically activated blade mixer.

3. Substance to remove vitreous enamels or spelters and its preparation and application procedures in accordance with clause I which is **characterized by** the fact that optionally it is possible to make this remover substance circulate with a centrifugal pump and pipes towards a precipitator and back to the container or pan which can be drained periodically in order to remove the vitreous enamel or pewter particles that have been removed.
